# EUROPEAN PATENT APPLICATION

(11) **EP 2 204 319 A2**
(43) Date of publication of application: **07.07.2010**
(21) Application number: 10250014.7
(22) Date of filing: 06.01.2010
(51) Int. Cl.: B64D 13/00, B64D 33/00, B64D 41/00

(54) **Aircraft power and thermal management system with electric co-generation**

(30) Priority: 06.01.2009 US 349029
(71) Applicant: Hamilton Sundstrand Corporation, Windsor Locks, CT 06096-1010 (US)
(72) Inventor: Kalusky, Scott F., West Hartford Connecticut 06119 (US); Lents, Charles E., Amston Connecticut 06231 (US)
(74) Representative: Tomlinson, Kerry John

(57) **Abstract**

A power and thermal management system (10) includes an integrated power package (14) which receives bleed air (52), communicates conditioned air to an environmental control air distribution system (12) and selectively communicates electrical power with an electrical distribution system (18).

## Description

### BACKGROUND

The present disclosure relates to an aircraft Power and Thermal Management System, and more particularly to an integrated power package configuration which provides the co-generation of electrical power.

An ECS provides a supply of conditioned air to an enclosure, such as an aircraft cockpit and avionics packages. In one conventional system, the ECS typically includes an air-cycle machine (ACM) powered by pressurized air from a high pressure engine bleed or an electric motor-compressor. The bleed air is precooled within an air-to-air heat exchanger with heat being rejected to engine fan or ram air and then flowed to a compressor of the ACM. A hot gas bypass around the ACM controls the temperature of the conditioned air to the enclosure.

A separate Auxiliary Power Unit (APU) provides ground power. In some military applications, the APU and ACM are integrated into a single multi-wheel turbo-machine.

### SUMMARY

A power and thermal management system according to an exemplary aspect of the present disclosure includes an integrated power package which receives bleed air, communicates conditioned air to an environmental control system and selectively communicates electrical power with an electrical system.

An integrated power package according to an exemplary aspect of the present disclosure includes an integral starter generator (IS/G) between a power turbine and a compressor, the IS/G being operable as a motor to supplement power to a common shaft in response to a first bleed air supply received by the compressor, and the IS/G being operable as a generator to generate electrical power in response to a second bleed air supply being greater than the first bleed air supply.

A method of power and thermal management for an aircraft according to an exemplary aspect of the present disclosure includes operating an integral starter generator (IS/G) as a motor to supplement power to the integrated power package in response to a first bleed air supply; and operating the integral starter generator (IS/G) as a generator to generate electrical power in response to a second bleed air supply, said second bleed air supply being greater than said first bleed air supply.

### BRIEF DESCRIPTION OF THE DRAWINGS

Various features will become apparent to those skilled in the art from the following detailed description of the disclosed non-limiting embodiment. The drawing that accompanies the detailed description can be briefly described as follows:

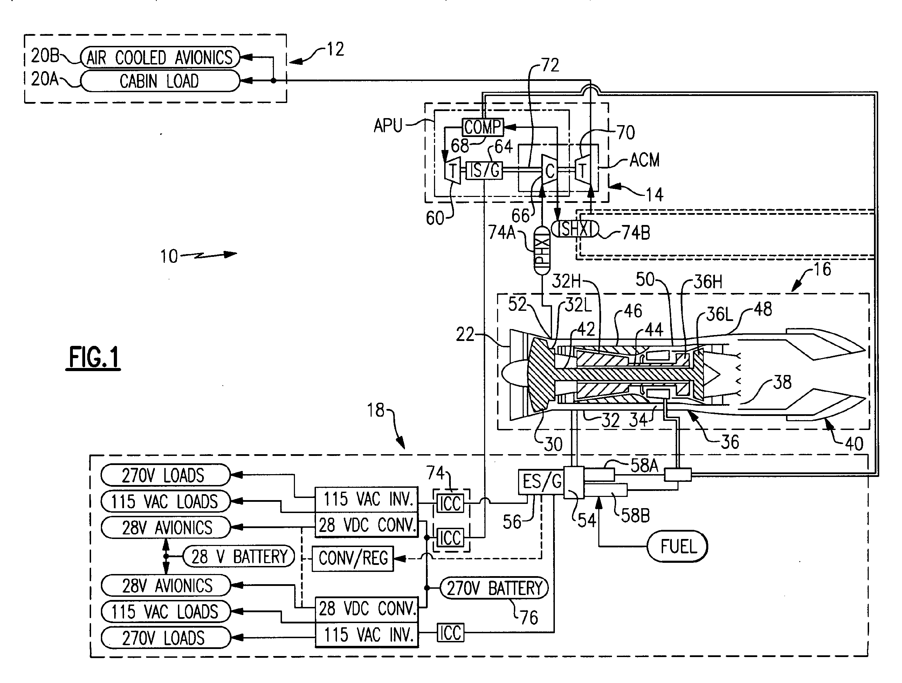

Figure 1 is a schematic of an aircraft power and thermal management system with an integrated power package for cogeneration of electrical power.

### DETAILED DESCRIPTION

Figure 1 schematically illustrates a general schematic view of an aircraft Power and Thermal Management System (PTMS) 10. The system 10 includes an environmental control air distribution system 12, an integrated power package (IPP) 14, a gas turbine engine 16 and an aircraft electrical power distribution system (EPDS) 18. The IPP 14 is in fluid communication with the gas turbine engine 16 and in electrical communication with the electrical system 18. The IPP 14 generates conditioned air for communication into the environmental control air distribution system 12 such as a cockpit 20A and avionics package 20B. An exemplary embodiment will be described in the context of an aircraft having one or more gas turbine propulsion engines. In some instances, only part of the system may be employed with any type of turbine based main propulsion engine.

The gas turbine engine 16 may be a low bypass afterburning turbofan engine which generally includes a fan section 30, a compressor section 32, a combustor section 34, a turbine section 36, an augmentor section 38, and a nozzle section 40. It should be understood that various engines may alternatively be utilized herewith.

The compressor section 32, combustor section 34, and turbine section 36 are generally referred to as the core engine. The core engine may include a low spool 42 and high spool 44 in which gases of combustion from the combustor section 34 are expanded through the turbine section 36 and discharged as a primary exhaust flow. The low spool 42 may include the fan section 30, a low pressure compressor 32L and a low pressure turbine 36L. The high spool 44 may include a high pressure compressor 32H and a high pressure turbine 36H.

An annular fan bypass flow path 46 surrounds the core engine. An outer engine duct structure 48 and an inner cooling liner structure 50 define the annular fan bypass flow path 46. It should be understood that various engine structures may form the outer engine duct structure 48 and the inner cooling liner structure 50 to communicate a secondary airflow, disclosed herein as engine bypass flow, different than the primary exhaust flow.

Air under pressure admitted at an engine inlet 22 is compressed by the fan section 30 and the compressor section 32 for communication into the core engine and the annular fan bypass flow path 46. The secondary airflow may be utilized for a multiple of purposes including, for example, cooling, bleed flow, pressurization and partial shielding of the nozzle section 40 from the intense heat of the primary exhaust flow.

The engine 16 includes a low pressure engine bleed outlet 52 which communicates low pressure bleed air from the fan section 30, the compressor section 32 or a combination thereof to the IPP 14. That is, the low pressure engine bleed outlet 52 communicates low pressure bleed air from an early engine stage to provide low pressure bleed air that is at a relatively minimal compression and temperature.

The engine 16 also includes an accessory gearbox 54 that is mechanically driven. In one non-limiting embodiment, the accessory gearbox system 54 is mechanically driven by the high spool 44. The accessory gearbox system 54 drives equipment such as an external starter generator (ES/G) 56, an oil pump 58A and a fuel pump 58B. It should be understood that various alternative or additional equipment may be driven by the accessory gearbox 54.

The IPP 14 includes a power turbine 60, an integral starter generator (IS/G) 64, a compressor 66, a combustor 68 and a cooling turbine 70 on a common shaft 72. The power turbine 60, combustor 68 and the compressor 66 form turbomachinery which operates as an Auxiliary Power Unit (APU) portion of the IPP 14 in which gases of combustion from the combustor 68 are expanded through the power turbine 60 to drive the IS/G 64 as a motor.

The compressor 66 and the cooling turbine 70 operate as an air-cycle machine (ACM) portion of the IPP 14. Low pressure bleed air from the low pressure engine bleed outlet 52 is received into the compressor 66 where the low pressure bleed air is compressed to a higher pressure. The low pressure bleed air from the low pressure engine bleed outlet 52 may optionally be cooled by a primary heat exchanger 74A. The primary heat exchanger 74A may be an air-to-air exchanger which further cools the compressed air by heat exchange with an engine fan or ram air flow, however, by drawing low pressure bleed air, the primary heat exchanger 74A is optional. This reduces system weight and space requirements.

The low pressure bleed air compressed by the compressor 66 is cooled in a secondary heat exchanger 74B then communicated to the cooling turbine 70. The secondary heat exchanger 74B may be an air-to-air exchanger which further cools the compressed air by heat exchange with an engine fan or ram air flow. Alternatively, the relatively low pressure engine bleed air facilitates a liquid-to-air heat exchanger cooled by fuel (illustrated in phantom). The fuel may be further conditioned by a fuel stabilization system to increase heat rejection thereto. From the cooling turbine 70, conditioned air is communicated to the cockpit 20A and the avionics package 20B.

The conditioned air flow may be regulated by variable geometry in the ACM portion while the temperature of the conditioned air is regulated by the addition or extraction of shaft power to the IPP 14 via the IS/G 64. The IS/G 64 selectively operates as a generator to generate electrical power for communication to the electrical system 18 through an integrated converter controller bus 74. Alternatively, the IS/G 64 selectively receives power from the electrical system 18 to operate as a motor through communication with the integrated converter controller bus 74. In general, the IPP 14 will require power at relatively low power settings of the engine 16 such that the IS/G 64 is operated as a motor to provide sufficient conditioned air, while at high power settings the IS/G 64 is operated as a generator to generate power for return to the bus 74.

The electric power generated by the IPP 14 at high power settings facilitates the offset of peak actuation power requirements typically associated with particular aircraft flight conditions. These features reduce the electric power demand on the aircraft and reduce overall system weight.

In operation, a battery 76 in the EPDS 18 provides power to the IS/G 64 to start the IPP 14. The IPP 14 provides power to the ES/G 56 to bring the engine 16 to a threshold starting speed. The engine 16 then increases to idle speed and the electrical system 18, which includes the ES/G 56, transitions from operations as a motor to operations as a generator. During high power setting flight conditions such as takeoff and high-speed dash a maximum of low pressure bleed air is provided from the engine 16 such that the ACM portion of the IPP 44 provides an abundance of conditioned air. The IS/G 64 is then utilized as a generator to provide electrical power to the EPDS 18. That is, the IS/G 64 absorbs energy in excess of that required to provide sufficient conditioned air with the excess energy converted into electrical energy by the IS/G 64.

During low power setting flight conditions such as ground operations and descent, a minimum of low pressure bleed air is provided from the engine 16 such that the ACM of the IPP 14 may not provide sufficient conditioned air. The IS/G 64 is then utilized as a motor to increase rotation of the ACM portion of the IPP 14 and increase the provision of conditioned air. That is, the IS/G 64 operates as a motor to at least partially supplement drive of the ACM portion of the IPP 14 to provide sufficient conditioned air.

During normative power setting flight conditions such as cruise, generally sufficient bleed air is provided from the engine 16 such that the ACM portion of the IPP 14 provides sufficient conditioned air. System efficiency is thereby optimized at off-design conditions through elimination of the thermal bypass and optimization of IS/G 64 and ES/G 56 capacity.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present invention.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the invention may be practiced other than as specifically described. For that reason the appended claims should be studied to determine true scope and content.

## Claims

1. A power and thermal management system (10) comprising:
an electrical power distribution system (18);
an environmental control air distribution system (12); and
an integrated power package (14) which receives bleed air, communicates conditioned air to said environmental control air distribution system and selectively communicates electrical power with said electrical system.

2. The system as recited in claim 1, further comprising an external starter generator (ES/G) (56) driven by a propulsion engine (16), said ES/G being in electrical communication with said electrical power distribution system.

3. The system as recited in claim 1 or 2, wherein said integrated power package includes an integral starter generator (IS/G) (64), said IS/G being in electrical communication with said electrical power distribution system.

4. The system as recited in claim 3, wherein said integrated power package includes said IS/G, a power turbine (60), a compressor (66) and a cooling turbine (70) on a common shaft (72).

5. The system as recited in claim 3 or 4, wherein said IS/G selectively operates as a generator to selectively communicate electrical power to said electrical power distribution system.

6. The system as recited in claim 3, 4 or 5 wherein said IS/G selectively operates as a motor to selectively drive said integrated power package.

7. The system as recited in any preceding claim, wherein said bleed air is a low pressure bleed air; preferably wherein said low pressure bleed air is sourced from a compressor section of a gas turbine engine, and/or wherein said low pressure bleed air is sourced from a fan section of a gas turbine engine.

8. The system as recited in claim 1 or 2 wherein the integrated power package comprises a power turbine (60);
a cooling turbine (70);
a compressor (66) on a common shaft (72) between said power turbine and said cooling turbine; and
an integral starter generator (IS/G) (64) between said power turbine and said compressor, said IS/G being operable as a motor to supplement power to the common shaft in response to a first bleed air supply received by said compressor, said IS/G being operable as a generator to generate electrical power in response to a second bleed air supply of greater pressure than said first bleed air supply.

9. An integrated power package (14) comprising:
a power turbine (60);
a cooling turbine (70);
a compressor (66) on a common shaft (72) between said power turbine and said cooling turbine; and
an integral starter generator (IS/G) (64) between said power turbine and said compressor, said IS/G being operable as a motor to supplement power to the common shaft in response to a first bleed air supply received by said compressor, said IS/G being operable as a generator to generate electrical power in response to a second bleed air supply of greater pressure than said first bleed air supply.

10. The integrated power package as recited in claim 9, wherein said first bleed air supply and said second bleed air supply is a low pressure bleed air sourced from a compressor section (32) of a gas turbine engine (16).

11. The integrated power package as recited in claim 9, wherein said first bleed air supply and said second bleed air supply is a low pressure bleed air sourced from a fan section (30) of a gas turbine engine (16).

12. A method of power and thermal management for an aircraft comprising:
receiving bleed air to at least partially power an integrated power package to generate conditioned air;
operating an integral starter generator (IS/G) as a motor to supplement power to the integrated power package in response to a first bleed air supply; and
operating the integral starter generator (IS/G) as a generator to generate electrical power in response to a second bleed air supply, said second bleed air supply having greater pressure than said first bleed air supply.

13. A method as recited in claim 12, further comprising operating the integrated power package as an air cycle machine.

14. A method as recited in claim 12 or 13, further comprising operating the integrated power package as an auxiliary power unit.

15. A method as recited in claim 12, 13 or 14, wherein receiving the bleed air includes receiving the bleed air from a compressor section of a gas turbine engine; and/or wherein receiving the bleed air includes receiving the bleed air from a fan section of a gas turbine engine.
